# EUROPÄISCHE PATENTSCHRIFT

(11) **EP 4 087 394 B1**
(45) Veröffentlichungstag und Bekanntmachung des Hinweises auf die Patenterteilung: **09.10.2024**
(21) Anmeldenummer: 21700385.4
(22) Anmeldetag: 08.01.2021
(51) Int. Cl.: A01M 7/00, B64D 1/18, B64U 30/20, B64U 50/13, B64U 50/19, B64U 101/30, B64U 10/14

(54) **VERFAHREN UND SYSTEM ZUM ANTRIEB VON SCHWEBENDEN GERÄTEN UND TEILSYSTEMEN VON GERÄTEN ZUM EINSATZ IN DER LAND- UND FORSTWIRTSCHAFT**
METHOD AND SYSTEM FOR MOTORING SUSPENDED IMPLEMENTS AND SUBSYSTEMS OF IMPLEMENTS FOR USE IN AGRICULTURE AND FORESTRY
PROCÉDÉ ET SYSTÈME DE CONDUITE D'ENGINS SUSPENDUS ET DE SOUS-ENSEMBLES D'ENGINS UTILISÉS DANS L'AGRICULTURE ET LA SYLVICULTURE

(30) Priorität: 11.01.2020 DE 102020000138
(43) Veröffentlichungstag der Anmeldung: 16.11.2022
(73) Patentinhaber: Wünsche, Thomas, 85304 Ilmmünster (DE)
(72) Erfinder: Wünsche, Thomas, 85304 Ilmmünster (DE)
(74) Vertreter: Liebl, Thomas
(86) Internationale Anmeldenummer: PCT/EP2021/050246
(87) Internationale Veröffentlichungsnummer: WO 2021/140184

(56) Entgegenhaltungen:
- EP-A1- 3 098 161
- EP-B1- 3 098 161
- CN-A- 105 292 468
- CN-A- 106 394 907
- GB-A- 128 724
- JP-A- 2016 135 659
- US-B1- 9 828 095

## Beschreibung

Die vorliegende Erfindung betrifft ein Verfahren und System zum Antrieb von schwebenden Geräten und Teilsystemen von Geräten zum Einsatz in der Land- und Forstwirtschaft, insbesondere auch zur Ausbringung von Stoffen wie zum Beispiel flüssigen oder festen Pflanzenschutzmitteln, flüssigen oder festen Düngemitteln oder Saatgut, oder deren Gemischen auf land- und forstwirtschaftliche Nutzflächen, das die Beibehaltung einer horizontalen oder konstant geneigten Lage des schwebenden Gerätes oder Teilsystems beim Vortrieb, bei der Änderung der Bewegung und beim Ausgleich von Störungen ermöglicht.

In der modernen Landwirtschaft versprühen üblicherweise bodengebundene fahrende Spritzgeräte Pflanzenschutz- und Schädlingsbekämpfungsmittel mit Hilfe von Spritzdüsen auf den Boden oder den Pflanzenbestand. Dünger werden üblicherweise durch bodengebundene fahrende Spritzgeräte oder ebenfalls bodengebundene fahrende Streugeräte ausgebracht.

Schwebende Geräte wie etwa Drehflügler werden zum Ausbringen von Pflanzenschutzmitteln ebenfalls bereits angewendet. Sie bringen flüssige Pflanzenschutzmittel mittels Spritzdüsen am Fluggerät auf den Boden oder den Pflanzenbestand aus. Sie fliegen entweder autark mit Hilfe einer elektronischen Steuerung und eines GNSS selbstständig vorgegebene Strecken ab oder werden von einem Piloten per Funkfernsteuerung gelenkt. Den diesbezüglichen Stand der Technik beschreibt für Hubschrauberdrohnen die Gebrauchsmusterschrift DE202014002338U1. Den Stand der Technik bei Mehrfachdrehflüglem beschreiben die Patentschriften US 9,382,003 B2, JP 2016-135659 A, CN 105292468 A und EP 3 098 161 A1.

Mehrfachdrehflügler zum Ausbringen von Pflanzenschutzmitteln verfügen dabei üblicherweise über mehrere in einer oder mehreren Horizontalebenen angeordnete Propeller zum Erzeugen des zum Schweben erforderlichen Auftriebs, der Schub wirkt in Richtung der Normale auf die Horizontalebene der schwebenden Plattform. Als Horizontalebene einer schwebenden Plattform wird in diesem Zusammenhang eine beliebige, dem Körper der schwebenden Plattform fest zuordenbare Ebene verstanden, die im ruhigen, horizontal unbeschleunigten Schweben senkrecht auf dem Vektor der Erdanziehung steht. Horizontale Bewegungen und Beschleunigungen im erdfesten System sowie Kräfte zur Kompensation von Störungen können in dieser Anordnung nur durch Neigen der körperfesten Horizontalebene des schwebenden Gerätes gegen die geographische Horizontale - eine Ebene, die senkrecht auf dem Vektor der Erdanziehung steht - erzeugt werden. Das bedeutet bei fest mit dem schwebenden Gerät verbundenen Ausbringeinheiten, dass die Ausbringeinheit mit der schwebenden Plattform gegenüber der Erdoberfläche und dem Pflanzenbestand geneigt wird. Für wenig ausgedehnte Systemteile wie Kameras bei Photodrohnen wird die Ausrichtung zur Erdoberfläche auch bei Neigung des schwebenden Gerätes durch sogenannte Gimbal-Systeme kompensiert, die gesteuerte Freiheitsgrade gegenüber dem Gerätekörper aufweisen und damit die Neigung des Gerätes von der Neigung der Kamera entkoppeln. Für räumlich ausgedehnte Komponenten wie z.B. Spritzgestänge bei schwebenden Geräten im landwirtschaftlichen Einsatz ist dies jedoch aufgrund der relativen Bewegung und daraus folgender möglicher Kollision zwischen lagekompensierter Komponente und Gerätekörper problematisch.

Weiterhin erfordert die Veränderung von horizontalen Schubkomponenten zur Änderung der Bewegungsrichtung oder zum Ausgleich von Störungen bei nach dem Stand der Technik mit in der Horizontalebene des schwebenden Gerätes angeordneten Propellern und daraus resultierenden Luftströmungen und Schubkomponenten senkrecht zu dieser Horizontalebene zwingend eine Kippbewegung der Normalen auf die körperfeste Horizontalebene des Gerätes gegen die Vertikale, in der die Erdanziehung wirkt. Während dies bei kleinen Mehrfachdrehflüglem wie etwa Photodrohnen mit geringen Trägheitsmomenten um horizontale Achsen und geringen zur Erreichung der gekippten Lage erforderlichen Wegen der Propellerzentren unproblematisch ist, führt diese Vorgehensweise bei größeren Strukturen mit Arbeitsbreiten von 2m oder mehr zu dynamischen Problemen, die die mögliche Arbeitsbreite bei gleichzeitig exakter Positionierung und schneller Ausregelung von Störungen begrenzen. Außerdem führt die Neigung des Gerätes zu einem unterschiedlichen Abstand der einzelnen Düsen beispielsweise eines Spritzgestänges zum zu behandelnden Pflanzenbestand, sofern das Spritzgestänge nicht mittels eines Gimbal gegen die Ebene des Gerätes geneigt wird. Räumlich ausgedehnte schwebende Geräte mit Arbeitsbreiten von 2m und mehr sind daher in dieser Anwendung mit Mehrfachdrehflüglem nach dem Stand der Technik nur mit wesentlichen Einschränkungen in der Systemdynamik und der Anwendung realisierbar.

Die vorliegende Erfindung, ein Verfahren und System für den Antrieb von schwebenden Geräten und schwebenden Teilsystemen von Geräten zur Ausbringung von Stoffen und deren Gemischen in der Land- und Forstwirtschaft mit Schubkomponenten in der horizontalen Ebene der Plattform ermöglicht das Schweben und die Erzeugung von horizontalen Schubkomponenten zum Vortrieb, zur Änderung der Bewegungsrichtung und räumlichen Orientierung sowie zum Ausgleich von Störungen wie z.B. durch Seitenwind bei Erhalt der horizontalen oder konstant geneigten Lage der Plattform gegenüber der Erdanziehung und der Geoidoberfläche. Als schwebende Plattform wird dabei jedes System verstanden, das über dem Boden schwebt, ohne seine Gewichtskraft über eine mechanische Verbindung zum Boden, beispielsweise über Gestänge oder Reifen, abzustützen. Insbesondere werden als schwebende Plattformen Systeme bezeichnet, die ihr Gewicht über den Schub von Luftströmungen oder von Strömungen von anderen Gasen oder Gasgemischen kompensieren.

Dazu werden erfindungsgemäß Luftströme oder Ströme anderer Gase/Gasgemische, wie zum Beispiel Abgase von Turbinen, und damit Schubkomponenten erzeugt, die in ihrer Richtung von der Normalen auf die Horizontalebene der schwebenden Plattform abweichen. Durch die Anteile der Schubkomponenten, die in der Horizontalebene der schwebenden Plattform wirken, werden Kräfte und Beschleunigungen in dieser Ebene erzeugt, die im Gegensatz zu den dem Stand der Technik entsprechenden Antriebssystemen gesteuerte Bewegungen bei Erhalt der horizontalen Schwebelage ermöglichen.

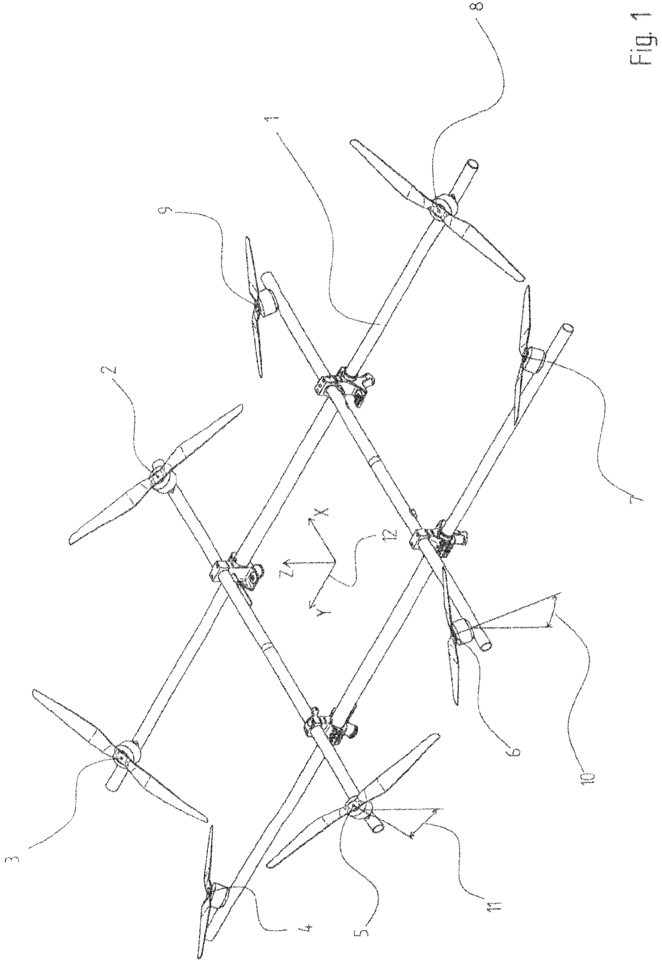

Eine bevorzugte Ausführung der Erfindung zeigt **Fig. 1****.** in dieser Ausführung werden die gegenüber der Normalen auf die Horizontalebene der schwebenden Plattform geneigten Luftströmungen durch eine am Rahmen der schwebenden Plattform **1** angebrachte Kombination aus Motoren mit angebauten Propellern **2, 3, 4, 5, 6, 7, 8, 9,** deren Drehachsen mit fest eingestellten Winkeln von mindestens 10° und maximal 90° gegen die Normale auf die Horizontalebene geneigt sind, erzeugt. Die Neigungswinkel **10, 11** sind exemplarisch an den Motor-Propeller-Einheiten **5, 6** dargestellt, jedoch in dieser Anordnung bei allen Motor-Propeller-Einheiten vorhanden. In einer besonders bevorzugten Ausführung beträgt die Neigung zwischen 15° und 45°, so dass die von der Anordnung erzeugten Luftströme ein günstiges Verhältnis zwischen der entgegen der Erdanziehung wirkenden vertikalen Schubkomponente und für die Bewegungssteuerung erforderlichen horizontalen Schubkomponenten realisieren.

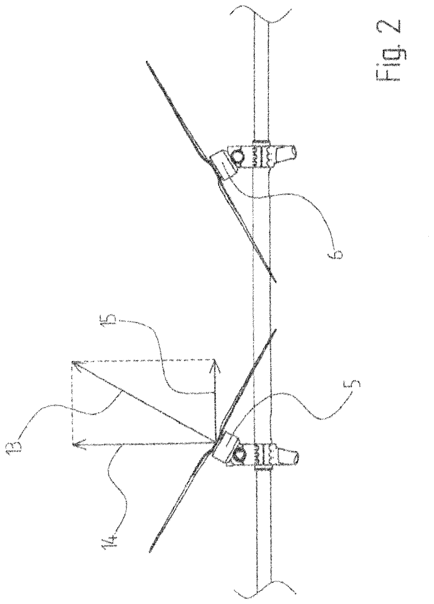

In einer bevorzugten Ausführung der Erfindung wird je ein Paar von Motor-Propeller-Einheiten so angeordnet, dass die Propellerebenen und damit die erzeugten Luftströmungen zueinander V-Form oder umgekehrte V-Form aufweisen. Dies ist in **Fig. 2** dargestellt, die einen Ausschnitt einer Ansicht in Richtung der X-Achse des Koordinatensystems **12** aus **Fig. 1** umfasst Am Beispiel der Motor-Propeller-Einheit **5** sind der Schub in Achsrichtung **13** und seine Zerlegung in Vertikalkomponente **14** und Horizontalkomponente **15** dargestellt. Die Motor-Propeller-Einheit **6** erzeugt aufgrund der symmetrischen V-Form bei gleichem Gesamtschub eine Horizontalkomponente, die jener der Motor-Propeller-Einheit **5** entgegengesetzt wirkt. Bei gleichem Gesamtschub der beiden Einheiten heben sich daher die Horizontalkomponenten auf. Bei Unterschieden im Gesamtschub ergibt sich jedoch ein Horizontalschub, der die erfindungsgemäße horizontale Beschleunigung und daraus resultierend horizontale Bewegung ermöglicht.

Besonders bevorzugt ist eine Ausführung, bei der je zwei derartige Paare symmetrisch zur Mitte oder zum Massenschwerpunkt der schwebenden Plattform angeordnet sind, da in dieser Anordnung ein Horizontalschub durch gleichmäßige Anhebung der Drehzahlen und Schübe der in einer Richtung angeordneten Schuberzeuger und entsprechende Absenkung der Drehzahlen und Schübe der entgegengesetzt angeordneten Schuberzeuger verursacht wird. Dies wird in der Anordnung gemäß **Fig. 1** durch die Paare von Motor-Propeller-Einheiten **3/4** und **7/8** für Schübe in X-Richtung des Koordinatensystems **12** sowie durch die Paare von Motor-Propeller-Einheiten **2/9** und **5/6** für Schübe in Y-Richtung des Koordinatensystems **12** realisiert. Die Erzeugung des Horizontalschubs sei exemplarisch an einem Schub in Richtung der positiven Y-Achse veranschaulicht: Ein Anhebung der Drehzahlen der Motor-Propeller-Einheiten **6** und **9** bei gleichzeitiger Absenkung der Drehzahlen der Motor-Propeller-Einheiten **2** und **5** führt zu einer Kraft in Richtung der Y-Achse. Bleibt die Summe des Schubs der genannten Motor-Propeller-Einheiten konstant, so bleibt auch der summarische Vertikalschub konstant. Allerdings ergibt sich in der gezeigten Anordnung durch Veränderung des Vertikalschubs der einzelnen Motor-Propeller-Einheiten ein Drehmoment um die X-Achse. Daher ist zur Erhaltung der Flugstabilität eine Kompensation dieses Drehmomentes, das unkompensiert zu einem Kippen führen würde, erforderlich. Diese Kompensation kann besonders vorteilhaft in einer Anordnung erzeugt werden, bei der zwei weitere Paare von Schuberzeugern in gleicher Anordnung, jedoch mit resultierenden Schubkomponenten in der anderen horizontalen Hauptrichtung der schwebenden Plattform und mit Abstand zur Drehachse angebracht sind. In dieser Anordnung kann das Kippmoment durch Gegenmomente kompensiert werden, die durch Änderung der vertikalen Schubkomponenten dieser zweiten Gruppe von Schuberzeugern, im genannten Beispiel und der Anordnung gemäß **Fig. 1** die Motor-Propeller-Paare **3/4** sowie 7/8, bewirkt werden

In dieser Ausführung kann ein Drehschub um die vertikale Achse durch gegenläufige Änderung des Schubs der einzelnen Motor-Propeller-Paare, also beispielsweise Erhöhung des Schubs der Motor-Propeller-Einheiten **6, 2** und Absenkung des Schubs der Motor-Propeller-Einheiten **5, 9,** erzeugt werden.

Alternativ können die erfindungsgemäß erforderlichen Strömungen und resultierenden Schubkomponenten in der Horizontalebene der schwebenden Plattform von einem oder mehreren in beliebiger Lage angeordneten Strömungserzeugern verursacht werden, indem aus einer oder mehreren Strömungen anschließend durch die Strömung umlenkende Komponenten wie beispielsweise Rohre oder Leitklappen Strömungen und daraus resultierende Schübe mit Komponenten in der Horizontalebene der schwebenden Plattform erzeugt werden.

Weiterhin kann ein erfindungsgemäßes Verfahren und System auch durch Antriebe für schwebende Plattformen mit mindestens einem Strömungserzeuger, der eine Strömung erzeugt, die eine horizontal wirkende und um die Normale zur Horizontalebene der schwebenden Plattform oder eine andere, einen Winkel zur Horizontalebene der Plattform bildende, Achse drehbare Komponente enthält. Diese erfindungsgemäße Realisierung kann vorzugsweise dadurch erfolgen, dass ein oder mehrere Schuberzeuger mit einer horizontalen Schubkomponente, in einer vorteilhaften Ausführung der Erfindung implementiert durch Motor-Propeller-Einheiten, um eine zur Z-Achse des Koordinatensystems **12** in **Fig. 1** parallele Achse gedreht werden.

Das erfindungsgemäße Verfahren und System kann ebenfalls realisiert werden durch Antriebseinheiten für schwebende Plattformen, bei denen die Variation von Schubkomponenten in der Horizontalebene der Plattform durch Schwenken der Strömungserzeuger oder Umlenkung der Strömung im erfindungsgemäßen Winkelbereich von 10° bis 90° gegenüber der Normalen auf die Horizontalebene implementiert werden. Dies kann vorteilhaft beispielsweise durch eine Drehung der Strömungserzeuger um eine Achse in der Horizontalebene der schwebenden Plattform, entsprechend einer Änderung der Winkel **10, 11** in **Fig. 1****,** erzielt werden.

Dem erfindungsgemäßen Verfahren und System entsprechen auch Antriebssysteme für schwebende Plattformen, in denen neben den die Erfindung charakterisierenden Luftströmungen mit Horizontalkomponente zusätzlich Luftströmungen mit einer Strömungsrichtung in einer Normalrichtung zur Horizontalebene der schwebenden Plattform vorliegen. Eine derartige Anordnung kann im erfindungsgemäßen System sinnvoll sein, um beispielsweise zusätzlichen vertikalen Schub zu erzeugen oder konstante, rein vertikal orientierte Strömungen im Bereich der Ausbringelemente bereitzustellen.

In der Realiserung eines erfindungsgemäßen Systems können neben den Strömungserzeugern auch Stellelemente für den Schub der Strömungserzeuger sowie eine Stell- und Regeleinheit zur Vorgabe der Drehzahlen der Schuberzeuger, der Strömungen und des daraus resultierenden Schubs zum Einsatz kommen. Diese Stell- und Regelelemente sind vorzugsweise als elektronische Baugruppen ausgeführt.

## Patentansprüche

1. Verfahren zum Antrieb von schwebenden Geräten und schwebenden Teilsystemen von Geräten in der Land- und Forstwirtschaft mit der konstruktionsbedingten Fähigkeit zum Schweben auf der Stelle, mit einem oder mehreren Strömungserzeugern zur Erzeugung von Luftströmungen oder Strömungen anderer Gase oder Gasgemische, die das Gerät oder Teilsystem des Gerätes vorrangig durch den erzeugten Vertikalschub im Schweben halten und Kräfte zum Vortrieb und/oder zur Änderung der Bewegung erzeugen, wobei die Strömungen oder Teilströmungen mit einer Neigung der Mittelachse der jeweiligen Strömung oder Teilströmung von mindestens 10° und maximal 90° gegenüber der Normalen auf die horizontale Ebene des Gerätes oder Teilsystems erzeugt werden, wobei durch wechselnde Strömungsgeschwindigkeit der Strömungen und/oder Teilströmungen Schub erzeugt wird, der zumindest eine Komponente in der horizontalen Ebene des Gerätes oder Teilsystems hat und zum Vortrieb und/oder zur Änderung der Geschwindigkeit des Geräts oder Teilsystems und/oder zur Kompensation von Störungen in dieser Ebene, bei Beibehaltung einer horizontalen oder konstant geneigten Lage des schwebenden Gerätes oder Teilsystems, genutzt wird;
**dadurch gekennzeichnet, dass**
durch die Variation der Strömungen bewirkte Drehmomente um horizontale Achsen durch die vertikale Schubkomponente anderer Strömungen ausgeglichen werden.

2. Verfahren nach Anspruch 1, **dadurch gekennzeichnet, dass** die Strömungen von den Propellern eines Mehrfachdrehflüglers erzeugt werden und die Rotationsachse von mindestens zwei der Propeller mit einem Winkel von mindestens 10° und maximal 90° gegen eine Normale auf die Horizontalebene des Gerätes oder Teilsystems geneigt sind.

3. Verfahren nach Anspruch 1, **dadurch gekennzeichnet, dass** die Strömungen oder Teile der Strömungen mittels Vorrichtungen zur Umlenkung von Strömungen in mindestens zwei Richtungen mit einem Winkel von mindestens 10° und maximal 90° gegenüber einer Normalen auf die Horizontalebene des Gerätes oder Teilsystems umgelenkt werden.

4. Verfahren nach Anspruch 1, **dadurch gekennzeichnet, dass** die Schubkomponenten in der Horizontalebene des Gerätes oder Teilsystems durch Umlenkung der Strömung in einem Winkelbereich, der den erfindungsgemäßen Winkelbereich von 10° bis 90° gegenüber einer Normalen auf die Horizontalebene des Gerätes enthält, verändert werden.

5. Verfahren nach den Ansprüchen 1 bis 4, **dadurch gekennzeichnet, dass** die die Strömungen erzeugenden oder umleitenden Elemente paarweise in einer Linie, jedoch mit entgegengesetzter Richtung angeordnet sind und daher Ströme mit V-förmiger oder umgekehrt V-förmiger Charakteristik erzeugt werden, die abhängig von der Intensität der Strömungen eine resultierende horizontale Schubkomponente und damit eine horizontale Kraft oder Beschleunigung erzeugen.

6. Verfahren nach den Ansprüchen 1 bis 5, **dadurch gekennzeichnet, dass** durch Variation der Schubkomponenten die Erzeugung eines resultierenden Schubs in drei linear unabhängigen Raumrichtungen und resultierender Momente um drei linear unabhängige Achsen bei Erhalt einer horizontalen oder konstant geneigten Fluglage ermöglichen.

7. Verfahren nach den Ansprüchen 1 bis 6, **dadurch gekennzeichnet, dass** neben Strömungen mit horizontalen Komponenten auch Strömungen erzeugt werden, die parallel zu einer Normalen auf die Hauptebene des Gerätes verlaufen und Schub in Richtung einer Normalen auf die Hauptebene des Gerätes erzeugen.

8. Antriebssystem für ein schwebendes Gerät (1) oder ein schwebendes
Teilsystem eines Gerätes in der Land- und Forstwirtschaft, insbesondere auch zur Ausbringung von Stoffen und Stoffgemischen, mit einem oder mehreren Strömungserzeugern (2-9) zur Erzeugung von
Luftströmungen oder Strömungen anderer Gase oder Gasgemische, **dadurch gekennzeichnet, dass** Vortrieb und/oder Änderung der horizontalen Bewegung und/oder Ausgleich von in der Horizontalebene wirkender Störungen in horizontaler oder konstant geneigter Lage der Horizontalebene des Gerätes oder Teilsystems gemäß eines in den Ansprüchen 1 bis 7 beanspruchten Verfahrens realisiert wird.

## Claims

1. Method for driving hovering devices and hovering subsystems of devices in agriculture and forestry with the construction-dependent ability to hover in place with one or more flow generators to produce airflows or flows of other gases or gas mixtures that primarily keep the device or subsystem of the device hovering by the generated vertical thrust and generate forces for propulsion and/or change of movement, whereby the flows or partial flows are produced with an inclination of the central axis of the respective flow or partial flow of at least 10° and a maximum of 90° with respect to the normal to the horizontal plane of the device or subsystem, whereby thrust is generated by varying the flow speed of the flows and/or partial flows that has at least one component in the horizontal plane of the device or subsystem and is used for propulsion and/or changing the speed of the device or subsystem and/or compensating for disturbances in this plane while maintaining a horizontal or constantly inclined position of the hovering device or subsystem, **characterized in that** torques around horizontal axes caused by the variation of flows are compensated by the vertical thrust component of other flows.

2. Method according to claim 1 **characterized in that** the flows are generated by the propellers of a multi-rotor and the rotational axis of at least two of the propellers are inclined at an angle of at least 10° and a maximum of 90° against a normal to the horizontal plane of the device or subsystem.

3. Method according to claim 1 **characterized in that** the flows or parts of the flows are deflected by devices for deflecting flows in at least two directions at an angle of at least 10° and a maximum of 90° with respect to a normal to the horizontal plane of the device or subsystem.

4. Method according to claim 1 **characterized in that** the thrust components in the horizontal plane of the device or subsystem are changed by deflecting the flow in an angular range that includes the inventive angular range of 10° to 90° with respect to a normal to the horizontal plane of the device.

5. Method according to claims 1 to 4 **characterized in that** the elements generating or redirecting the flows are arranged in pairs in a line but in opposite directions and thus generate flows with a V-shaped or inverted V-shaped characteristic, which, depending on the intensity of the flows, generate a resultant horizontal thrust component and thus a horizontal force or acceleration.

6. Method according to claims 1 to 5 **characterized in that** by varying the thrust components, the generation of a resultant thrust in three linearly independent spatial directions and resultant moments about three linearly independent axes while maintaining a horizontal or constantly inclined flight position is enabled.

7. Method according to claims 1 to 6 **characterized in that** in addition to flows with horizontal components, flows are also generated that run parallel to a normal to the main plane of the device and generate thrust in the direction of a normal to the main plane of the device.

8. Drive System for a hovering device (1) or a hovering subsystem of a device in agriculture and forestry, particularly for the application of substances and substance mixtures, with one or more flow generators (2-9) for producing airflows or flows of other gases or gas mixtures, **characterized in that** propulsion and/or change of horizontal movement and/or compensation of disturbances acting in the horizontal plane in horizontal or constantly inclined position of the horizontal plane of the device or subsystem is realized according to a method claimed in claims 1 to 7.

## Revendications

1. Procédé de propulsion d'appareils flottants et de sous-systèmes flottants d'appareils en agriculture et en sylviculture avec la capacité de construction pour flotter sur place avec un ou plusieurs générateurs de flux pour produire des flux d'air ou des flux d'autres gaz ou mélanges de gaz qui maintiennent principalement l'appareil ou le sous-système de l'appareil en flottant par la poussée verticale générée et génèrent des forces pour la propulsion et/ou le changement de mouvement, les flux ou sous-flux étant produits avec une inclinaison de l'axe central du flux ou sous-flux respectif d'au moins 10° et au maximum 90° par rapport à la normale au plan horizontal de l'appareil ou du sous-système, la poussée étant générée par la variation de la vitesse des flux et/ou des sous-flux qui a au moins une composante dans le plan horizontal de l'appareil ou du sous-système et est utilisée pour la propulsion et/ou le changement de la vitesse de l'appareil ou du sous-système et/ou pour compenser les perturbations dans ce plan tout en maintenant une position horizontale ou constamment inclinée de l'appareil ou du sous-système flottant, **caractérisé en ce que** les moments de torsion autour des axes horizontaux causés par la variation des flux sont compensés par la composante de poussée verticale d'autres flux.

2. Procédé selon la revendication 1 **caractérisé en ce que** les flux sont générés par les hélices d'un multi-rotor et l'axe de rotation d'au moins deux des hélices sont inclinés à un angle d'au moins 10° et au maximum 90° par rapport à une normale au plan horizontal de l'appareil ou du sous-système.

3. Procédé selon la revendication 1 **caractérisé en ce que** les flux ou parties des flux sont déviés par des dispositifs pour dévier les flux dans au moins deux directions à un angle d'au moins 10° et au maximum 90° par rapport à une normale au plan horizontal de l'appareil ou du sous-système.

4. Procédé selon la revendication 1 **caractérisé en ce que** les composantes de poussée dans le plan horizontal de l'appareil ou du sous-système sont modifiées en déviant le flux dans une plage angulaire qui comprend la plage angulaire inventive de 10° à 90° par rapport à une normale au plan horizontal de l'appareil.

5. Procédé selon les revendications 1 à 4 **caractérisé en ce que** les éléments générant ou déviant les flux sont disposés par paires en ligne mais en directions opposées et génèrent ainsi des flux avec une caractéristique en forme de V ou en forme de V inversé, qui, selon l'intensité des flux, génèrent une composante de poussée horizontale résultante et donc une force ou une accélération horizontale.

6. Procédé selon les revendications 1 à 5 **caractérisé en ce que**, par variation des composantes de poussée, la génération d'une poussée résultante dans trois directions spatiales linéairement indépendantes et des moments résultants autour de trois axes linéairement indépendants tout en maintenant une position de vol horizontale ou constamment inclinée est permise.

7. Procédé selon les revendications 1 à 6 **caractérisé en ce qu'**en plus des flux avec des composantes horizontales, des flux sont également générés qui sont parallèles à une normale au plan principal de l'appareil et génèrent une poussée dans la direction d'une normale au plan principal de l'appareil.

8. Système de propulsion pour un appareil flottant (1) ou un sous-système flottant d'un appareil en agriculture et en sylviculture, en particulier pour l'application de substances et de mélanges de substances avec un ou plusieurs générateurs de flux (2-9) pour produire des flux d'air ou des flux d'autres gaz ou mélanges de gaz, **caractérisé en ce que** la propulsion et/ou le changement de mouvement horizontal et/ou la compensation des perturbations agissant dans le plan horizontal en position horizontale ou constamment inclinée du plan horizontal de l'appareil ou du sous-système est réalisé selon un procédé revendiqué dans les revendications 1 à 7.
